Europäisches Patentamt

European Patent Office

Office européen des brevets

(11) Publication number: **0 667 374 A2**

## EUROPEAN PATENT APPLICATION

(21) Application number: 95100841.6

(51) Int. Cl.⁶: **C08L 95/00**

(22) Date of filing: **23.01.95**

(30) Priority: **11.02.94 IT MI940242**

(43) Date of publication of application: **16.08.95 Bulletin 95/33**

(84) Designated Contracting States: **AT BE DE DK FR GB GR IE NL SE**

(71) Applicant: ENICHEM S.p.A.
Piazza della Repubblica, 16
I-20124 Milano (IT)

(72) Inventor: Bellio, Emanuele
Via Euripide, 18
Ragusa (IT)
Inventor: Patti, Nicola
V.le Napoleone Colajanni, 29
Ragusa (IT)

(74) Representative: Gennari, Marco
Eniricerche S.p.A.,
BREL,
Via F. Maritano, 26
I-20097 San Donato Milanese (MI) (IT)

(54) **Bitumens modified by polymeric compositions.**

(57) Bitumens modified by polymeric compositions comprising:

1) a polyolefin having a high cristallinity selected from the group consisting of high density polyethylene (HDPE), isotactic polypropylene (PPi) and mixtures thereof; and

2) at least a polymer, selected from the group consisting of (co)polymers of ethylene with propylene (EPM or EPDM), amorphous polypropylene (PPa), EVA, low density polyethylene (PE).

These bitumens thus modified have a better performance than bitumen as such or modified with traditional polymers and bitumen modified with polyethylene alone (PE), owing to the particular structural and morphological characteristics.

The present invention relates to bitumens modified by polymeric compositions comprising:

1) a polyolefin having a high cristallinity selected from the group consisting of high density polyethylene (HDPE), isotactic polypropylene (PPi) and mixtures thereof; and

2) at least a polymer, selected from the group consisting of (co)polymers of ethylene with propylene (EPM or EPDM), amorphous polypropylene (PPa), EVA, low density polyethylene (PE).

These bitumens have a better performance than bitumen as such or modified with traditional polymers and bitumen modified with PE alone, owing to the particular structural and morphological characteristics.

They are used for street paving or various types of waterproofing.

It is generally known that the use of bitumens requires a thermal sensitivity as low as possible; in fact the use of bitumens as such causes stiffening at low temperatures making it fragile to the slightest impact, whereas at temperatures higher than 30-40°C, its viscosity is so low as to make it spontaneously flow or become permanently deformed even under slight mechanical stress.

The use of bitumens with a better performance is also indispensable in the case of phonoabsorbing or self-draining street paving.

To improve the physical and technological characteristics of bitumens, research in the field has proposed bituminous compositions in which a bitumen is mixed with one or more organic polymers particularly of the styrene-butadiene family.

Patents EP 205.774 and EP 205.796 claim bituminous masses consisting of a bitumen obtained with a Vis-breaking process, modified with styrene-butadiene rubbers and with a PE not better identified from a structural point of view.

Italian Patent Applications Nr. 20638 A/85 and 20639 A/85, on the other hand, claim polymeric compositions based on EPM or EPDM, atactic polypropylene (PPa), isotactic polypropylene (PPi), high density polyethylene (HDPE) and ethylene-vinylacetate copolymers (EVA) capable of improving the performance of bitumens as such or modified with traditional polymers, such as PPa or block copolymers of the SBS type.

These compositions involve the use of high density PE (HDPE) and PPi, to improve the behaviour at high temperatures of the mixtures; polymers with a low crystallinity, PPa and/or EVA, are used on the other hand for improving the performance at cold temperatures.

In these formulations however, the polymers are vergin and the polyolefins with a high crystallinity (HDPE and PPi) are always in the minority as the main fraction is represented by polymers with a low crystallinity (EP, EPDM, PPa and EVA).

For the preparation of the bituminous conglomerates the above compositions are combined with lithic materials with a particular morphology, or if used in the building field for the lining of lofts, a mineral filler is added and they are used in the form of waterproof sheathing combined with a reinforcement.

Stable bituminous compositions are described in patent EP 315.239, filed by the same Applicant, which claims a bituminous composition for waterproof sheathing consisting of bitumen and vergin LLDPE (Linear Low Density Polyethylene).

Bituminous compositions containing vergin low density polyethylene (LDPE) are described in patents GB 2.219.802 and GB 2.223.229; these compositions have a Melt-Flow Index of between 0.2 and 2 g/10'.

The Applicant has recently proposed, in patent IT 1.216.057, the use of indifferentiated plastic materials and those deriving from solid urban waste for modifying the bitumens used in the above bituminous conglomerates which actually improve the technological performance.

Another polymer which has been used for the above purposes is atactic polypropylene (PPa); this is capable of giving the bitumen interesting characteristics when used in relatively high proportions with respect to the bitumen itself.

Unfortunately the bituminous compositions with a high level of PPa are not sufficiently dimensionally stable; they are easily deformable when subjected to mechanical stress even if slight and/or when used at medium to high temperatures.

Under these conditions the trampling and spontaneous slippage on a sloping plane are considerably jeopardized and in addition their low resistance to aging is an undesired characteristic of bituminous compositions containing PPa.

Remedies to these drawbacks have been sought by adding isotactic polypropylene, together with various inorganic fillers, to compositions containing PPa.

This however has only reduced but not solved the problem.

The necessity was therefore felt to improve the bituminous compositions both with respect to the stability to aging and the "trampling"; a further demand was to find polymeric compositions or single polymers which were capable of either substituting the PPa or reducing the negative effects thus forming, with the bitumen, compositions more stable to aging with the same mechanical characteristics.

The Applicant has now found that polymeric compositions mainly based on polyolefins with a particular macromolecular structure, together with one or more polymers with a crystallinity which is lower than the polyolefins mentioned above are capable of modifying bitumens improving their flexibility characteristics at low temperatures and resistance to penetration at high temperatures, and at the same time avoiding the drawbacks of the known art mentioned above.

The final result is that, by modifying the bitumen with these polymeric compositions, formulations can be obtained which are capable of guaranteeing technological and applicative performance which are better than those in use in the art.

The polymers with a low crystallinity mentioned above are the following: (co)polymer of ethylene with propylene (EP, EPDM), EVA LDPE, LLDPE, VLDPE, atactic polypropylene (PPa).

The present invention therefore relates to bituminous compositions comprising:

A) 70-98% by weight of bitumen and

B) 2-30% by weight of a polymeric composition characterized in that said polymeric composition comprises:

  B1) 30-65% by weight of a polyolefin having a high crystallinity selected from the group consisting of high density polyethylene (HDPE), isotactic polypropylene (PPi) or mixtures thereof, and

  B2) 35-70% by weight of at least one polymer selected from:

    (i) an ethylene/propylene (co)polymer, containing from 25 to 55% by weight of propylene;

    (ii) an ethylene/propylene/diene terpolymer, subsequently vulcanized or not, containing from 25 to 55% by weight of propylene and from 0.2 to 10% by weight of polymerized diene;

    (iii) ethylene vinylacetate (EVA) with a Melt-Flow Index (MFI) within the range of 0.3-500 g/10' and a vinylacetate (V.A.) content within the range of 1-50%;

    (iv) polyethylene (PE) with a density lower than 0.940 (ex. LDPE, LLDPE, VLDPE) and a MFI within the range 0.2-200 g/10';

    (v) atactic polypropylene, homo and/or copolymer, with an intrinsic viscosity within the range 0.3-1.2.

According to a preferred embodiment of the present invention, the bituminous compositions which can be applied in the waterproofing field, comprise:

A) 80-90% by weight of bitumen with a penetration of 180-200 tenths of a millimeter (dmm);

B) 10-20% by weight of a polymeric composition as defined above.

In the field of street paving, the bituminous compositions, according to a preferred form of embodiment, comprise:

A) 90-95% by weight of bitumen with a penetration of 80-100 dmm;

B) 5-10% by weight of a polymeric composition as defined above.

Another preferred form of embodiment of the present invention relates to bituminous compositions wherein the polymeric mixture B) comprises the following components:

B1) 20-60% by weight of HDPE;

B2) 35-20% by weight of PPi;

B3) 20-45% by weight of at least one polymer selected from (i), (ii), (iii), (iv) and (v).

Bitumens suitable for the purpose are those, of various origins, which generally have penetration values ranging from 40 to 350 dmm (according to ASTM D-5) and ball-ring values of between 60 and 30°C (according to ASTM D-36); the preferred bitumens are distillation (vacuum) bitumens which generally have penetration values of between 180 and 300 dmm (according to ASTM D-5) and ball-ring values of between 40 and 35°C (according to ASTM D-36).

Polyethylenes, with a reduced crystallinity compared to HDPE, suitable for the preparation of the bituminous compositions of the present invention are polyethylenes, vergin or recycled, whatever the origin, having density values of between 0.870 and 0.94 g/ml and Melt-Flow Index values of between 0.2 and 200 g/10'.

These Melt-Flow Index and density ranges can also be reached by suitably mixing different types of PE; the preparation procedure is described later.

Preferred polymeric compositions of the present invention are those wherein the mixture in B1) has a Melt-Flow Index value of between 0.5 and 100 g/10'.

The ethylene/propylene (EPR) and ethylene/propylene/diene (EPDM) are substances which are known in the art as are also the methods for their preparation.

Among the dienic components which can be present in the ethylene/propylene/diene copolymers there are for example: norbornadiene, ethylidine-norbornene, 1,4 hexadiene.

The average degree of dienic component is within the values of 0.2 and 10% by weight and preferably between 2 and 8% by weight.

EPRs and EPDMs suitable for the preparation of the bituminous compositions of the present invention have Mooney viscosity values (1 + 4) of between 13 (at 100 °C) and 70 (at 125 °C) and preferably between 25 (at 100 °C) and 40 (at 125 °C).

Both the EPR and EPDM copolymers are commercially available.

PPa is also known in the art together with the methods for its preparation even if its production has practically stopped following the arrival of new catalytic systems with a high yield and stereospecificity; the one which is sold at present is recovered from deposits where it had accumulated in the past years.

The polymers used can be either vergin or preferably recycled (processing waste, post-use polymers or polymers of any other origin).

An example of post-use recycled polymers is the mixture HDPE + PPi obtained from differentiated collections of post-use flasks for liquids.

The preference for recycled polymers is not only for economical reasons but above all because their use, in accordance with the use claimed herein, on the one hand leads to a reduction in the volume of post-use plastic to be disposed of, thus greatly contributing to the solution of problems relating to environmental pollution, and on the other hand enables the production of bituminous mixtures with better applicative performances than traditional mixtures.

This latter improvement is contrary to expectations for the use of higher proportions of polymers with a high crystallinity and/or with characteristics which are degraded by time and use; these expectations are based on the fact that in the present art polymers with a low crystallinity (EVA, LDPE, LLDPE) or even amorphous polymers (elastomers, PPa) are still preferred and used whereas in the above cases where there is the possibility of using polymers with a high crystallinity, such as HDPE and PPi, their participation in the polymeric formulation is negligible or, in any case, miminum.

Equally, surprising, with respect to the present art which considers only the use of vergin polymers, is the possibility, as proposed by the Applicant, of using recycled, post-use polymers which have undergone degradation caused by time and use.

With recycled polymers it often happens that their initial characteristics are different from those claimed herein; in this case the procedures described hereunder are followed: for polyolefins the Melt-Flow Index and density ranges can be reached by mixing different types of polyolefins with a Melt-Flow Index and density even outside the above ranges.

Another possibility is the structural modification of the polyolefins, commonly known as "reactive extrusion" or "reactive processing".

For EPR or EPDM elastomers it is also possible to reach the desired characteristics by mixing polymers with characteristics also outside the ranges specified above; if their molecular weight (Mooney viscosity) is too high, it is possible to reduce it by reactive processing; if it is too low cross-linking (or vulcanization) can be carried out "in situ", according to the methods known in the art.

For the structural modification of all the polymers of the present invention via reactive processing, the Applicant has prepared his own technology and the products thus obtained have been successfully used as shown in the examples of the present patent application.

The compositions of the present invention may contain, in addition to bitumen and the above polymers, one or more compatibilizing agents selected from fillers, pigments, waxes, stabilizers and dyes; among these 3-methoxyethoxyethoxyethoxypropyl-tri(methoxyethyoxethoxyethoxy)-silane(MTG Silane), a product commercially known as HULS, is preferably used.

The compositions of the present invention have good general characteristics, comprising those relating to processability in the preparation phase and application of the end-products; in addition, in the field of water-proofing, these compositions have much better "trampling" characteristics.

These properties are indicated in table 3 in which it can be seen that, to reach the same deformation at high temperatures in the traditional compositions, based on PPa alone, it is necessary to have much higher concentrations of polymer in the bitumen than those claimed herein (see reference example 5 of Tab. 3).

A further advantage of the compositions of the present invention derives from the fact that, in their preparation, even when the PPa is present in the maximum estimated quantity (60% by weight with respect to the total of polymers forming component B), the continuity of the polymeric phase (inversion point of the matrix) is reached in much lower polymer-bitumen ratios than those which contain the PPa of the known art.

As a result, in the compositions of the present invention, the typical performances of the polymers are reached by using them in much lower quantities with respect to the technique with PPA of the known art.

The bituminous compositions of the present inventions are used for street paving or various types of water-proofing, in the lining of tanks and pipes also underground; they can also be used in the preparation of waterproof sheathing, combined with a reinforcement selected from felts, fabrics and laminates of organic and/or inorganic material.

These sheathings generally have thicknesses of about 2-6 mm; the reinforcement is preferably selected from unwoven fabrics made of polyester and glass.

The sheathings are used for water-proofing linings in the building industry and civil works in general, for example for the lining and water-proofing of lofts, vertical walls, terraces, viaducts and reservoirs for collecting water.

The sheathings can be surface-lined with a metallic foil (for example aluminium or copper foil) for protective purposes and light reflection or a marble or slate grit surface-lining can be applied to them again for protection and also for aesthetical purposes.

The experimental examples hereunder provide a further illustration of the present invention but do not limit the scope of the invention itself.

The characteristics of the products (bitumen, HDPE + PPi mixture, PE, copolymers (EPM) and terpolymers (EPDM) of ethylene, PPa and EVA, respectively), used in the following examples are shown in Table 1.

The analytical methods used, are shown in Table 2.

In the experimental examples the flexibility characteristics at cold temperatures are expressed in °C and evaluated according to regulation UNI 8202 whereas the "trampling" characteristics are expressed in and evaluated with an "imprint" measurement which indicates the sinking depth in the composition of a steel ball having a diameter of 6 mm, under a weight of 1 Kg, for 30 seconds, operating under specific temperature conditions; this is a modification of the standard method ASTM D-5 which uses a needle instead of the ball for the evaluation of the degree of penetration.

EXAMPLE 1 (comparative)

500 g of bitumen are placed in a metallic 2-litre container, equipped with a mechanical stirrer.

The bitumen is heated under stirring to 180°C and, when this temperature has been reached, 100 g of PPa are added and the stirring continued, maintaining the temperature constant, until complete melting and continuing the homogenization for 1 hour.

The mixture thus obtained is poured into appropriate containers and test-samples are taken for the characterization tests (analytical methods) listed in Table 2.

All examples from 2 to 25 are carried out with the same procedure.

When EPM/EPDM are used, the mixing temperature can be increased to 230°C to reduce the operating times.

The compositions and corresponding characteristics are also shown in Table 3 wherein examples 2 to 6 are reference examples whereas those from 7 to 25 illustrate the present invention.

TABLE 1

| CHARACTERISTICS OF THE USED PRODUCTS | | | | | |
|---|---|---|---|---|---|
| **BITUMES** | | | | | |
| Type | 180/200 | 270/300 | | | |
| Insoluble n. C5 (%) | 13.1 | 6.2 | | | |
| Insoluble n. C7 (%) | 4.2 | 13 | | | |
| Polar resins (%) | 51.9 | 45.3 | | | |
| Saturated comp. (%) | 9.3 | 15.2 | | | |
| Aromatic Comp. (%) | 21.5 | 20.3 | | | |
| Ball-ring (°C) | 42 | 35 | | | |
| Penetration (dmm) | 183 | 270 | | | |
| **POLYOLEFINES** | | | | | |
| Type | MIX (HDPE+PPI)(1) | | LDPE (1) | LLDPE | EVA |
| | MIX 1 | MIX 2 | | | |
| HDPE (%) | 75 | 25 | - | - | - |
| V.A. (%) | - | - | - | - | 33 |
| MFI (g/10 min., 2.16 Kg) | 8 | 8 | 5.6 | 4.3 | 46 |
| Density (g/cc) | - | - | 0.9242 | 0.8939 | - |
| Intrinsic Viscosity (dl/g) | 0.86 | 0.88 | 0.85 | 0.62 | 0.7 |
| Melting point (°C) | - | - | 111 | 112 | amorphous |
| Crystallinity (%) | - | - | 37 | 6.6 | - |
| **EPM/EPDM** | | | | | (2) |
| MFI | 0.54 | 0.63 | 0.16 | 0.07 | 5.3 |
| C3⁻(%) | 28 | 42 | 27 | 27 | 27 |
| Mooney (1+4) 100°C | 42 | 43 | - | - | - |
| 125°C | - | - | 65 | 60 | - |
| Diene (%) | 0 | 0 | 0 | 3 | 0 |
| **PPA** | | | | | |
| Intrinsic Viscosity (dl/g) | 0.47 | | | | |

(1) Ricycle polymers modified through reactive extrusion

(2) Polymers modified through reactive extrusion

TABLE 2

| TYPE OF ANALYSIS | ANALYTICAL METHOD |
|---|---|
| Bitumen composition | ASTM D - 2007 - 86 and IP 143/82 |
| Thermal analysis | Heating and cooling cycle scanning of 5 °C/min. |
| Melt Flow Index | ASTM D -1238 (procedure A and B) |
| Density | ASTM D - 1505 |
| Viscosity | $1/sec^{-1}$, temperature indicated |
| Intrinsic Viscosity | 135 °C, TCB |
| Softening Point | (Ball - Ring) IP 58 |
| Penetration | ASTM D 5 - 71 |
| Imprint | 24 hrs conditioning, temperature indicated 1 Kg ; 30 sec. on 6 mm ball |
| Flexibility | UNI 8202 |

TABLE 3

Column groups: POLYMERS COMPOSITION — TYPOLOGY OF POLYMERS (MIX P. OLEFINS / EP-EPDM / LDPE-LLDPE / EVA / PPA) and WEIGHT COMPOSITION %; BLENDS COMP. (BIT = 100 parts); P.A.; VISC. (Cps) 1/sec⁻¹; IMPRINT; PEN; FLEX.

| Ex Nr. | HDPE % | PPI % | MFI | C3- % | Diene % | Visc.M ML(1+4) | LDPE MFI | Density g/cc | EVA MFI | VA % | PPA (η) | MIX HDPE+PPI | EP-EPDM | LDPE-LLDPE | EVA | PPA | Polym. parts | Filler parts | P.A. °C | VISC 140° | VISC 200° | IMPR 23°C dmm | IMPR 50°C dmm | PEN ddm | FLEX °C |
|---|---|---|---|---|---|---|---|---|---|---|---|---|---|---|---|---|---|---|---|---|---|---|---|---|---|
| 1 (Rif.) | - | - | - | - | - | - | - | - | - | - | 0.47 | 0 | 0 | 0 | 0 | 100 | 20 | 0 | 92 | 1120 | 73 | >100 | >1000 | 68 | -4 |
| 2 (Rif.) | - | - | - | - | - | - | - | - | - | - | 0.47 | 0 | 0 | 0 | 0 | 100 | 30 | 0 | 140 | 1910 | 231 | 63 | 237 | 52 | -12 |
| 3 (Rif.) | - | - | - | - | - | - | - | - | - | - | 0.47 | 0 | 0 | 0 | 0 | 100 | 40 | 0 | 146 | 5599 | 924 | 56 | 105 | 46 | -18 |
| 4 (Rif.) | - | - | - | - | - | - | - | - | - | - | 0.47 | 0 | 0 | 0 | 0 | 100 | 30 | 100 | 145 | 17507 | 1737 | 22 | 55 | 29 | -12 |
| 5 (Rif.) | - | - | - | - | - | - | 20 | 0.916 | - | - | 0.47 | 0 | 0 | 100 | 0 | 0 | 30 | 40 | 147 | 4590 | 950 | 40 | 175 | 30 | -8 |
| 6 (Rif.) | 75 | 25 | 8 | - | - | - | - | - | - | - | - | 100 | 0 | 0 | 0 | 0 | 20 | 0 | 101 | 1703 | 182 | 30 | 61 | 33 | -4 |
| 7 | 75 | 25 | 8 | 28 | 0 | 42(100°C) | - | - | - | - | - | 60 | 40 | 0 | 0 | 0 | 20 | 40 | 124 | 4775 | 1330 | 11 | 29 | 20 | 0 |
| 8 | 75 | 25 | 8 | 28 | 0 | 42(100°C) | - | - | - | - | - | 65 | 35 | 0 | 0 | 0 | 20 | 40 | 122 | 9995 | 6080 | 17 | 66 | 22 | 0 |
| 9 | 75 | 25 | 8 | 28 | 0 | 42(100°C) | - | - | - | - | - | 65 | 35 | 0 | 0 | 0 | 16 | 40 | 123 | 6145 | 3120 | 20 | 57 | 25 | -10 |
| 10 | 75 | 25 | 8 | 28 | 0 | 42(100°C) | - | - | - | - | - | 65 | 35 | 0 | 0 | 0 | 20 | 40 | 126 | 10930 | 4105 | 15 | 61 | 21 | -8 |
| 11 | 75 | 25 | 8 | 28 | 0 | 42(100°C) | - | - | - | - | - | 55 | 45 | 0 | 0 | 0 | 22 | 40 | 125 | 24830 | 7545 | 14 | 56 | 21 | -10 |
| 12 | 75 | 25 | 8 | 28 | 0 | 42(100°C) | - | - | - | - | - | 60 | 40 | 0 | 0 | 0 | 20 | 40 | 125 | 20175 | 5625 | 23 | 81 | 25 | -10 |
| 13 | 25 | 75 | 2.1 | 28 | 0 | 42(100°C) | - | - | - | - | - | 60 | 40 | 0 | 0 | 0 | 20 | 40 | 126 | 9626 | 1686 | 33 | 208 | 28 | -10 |
| 14 | 25 | 75 | 8 | 28 | 0 | 42(100°C) | 20 | 0.916 | - | - | - | 30 | 40 | 30 | 0 | 0 | 20 | 40 | 125 | 7347 | 1705 | 29 | 156 | 24 | -6 |
| 15 | 75 | 25 | 8 | 28 | 0 | 42(100°C) | 5.6 | 0.924 | - | - | - | 30 | 40 | 30 | 0 | 0 | 10 | 40 | 120 | 7264 | 677 | 33 | 229 | 34 | -6 |
| 16 | 75 | 25 | 8 | 28 | 0 | 42(100°C) | 5.6 | 0.924 | - | - | - | 30 | 40 | 30 | 0 | 0 | 20 | 40 | 122 | 10602 | 1903 | 19 | 62 | 19 | -4 |
| 17 | 75 | 25 | 8 | 28 | 0 | 42(100°C) | - | - | - | - | 0.47 | 30 | 40 | 0 | 0 | 30 | 20 | 40 | 127 | 8117 | 1720 | 32 | 258 | 29 | -12 |
| 18 | 75 | 25 | 8 | 28 | 0 | 42(100°C) | - | - | 45 | 33 | - | 30 | 40 | 0 | 30 | 0 | 20 | 40 | 120 | 12162 | 1956 | 40 | 295 | 30 | -12 |
| 19 | 75 | 25 | 8 | - | - | - | - | - | 45 | 33 | - | 60 | 0 | 0 | 40 | 0 | 20 | 40 | 126 | 9484 | 1538 | 31 | 324 | 25 | -12 |
| 20 | 75 | 25 | 8 | 20 | 0 | 42(100°C) | 4.3 | 0.904 | - | - | - | 30 | 40 | 30 | 0 | 0 | 20 | 40 | 121 | 10980 | 2480 | 23 | 161 | 23 | -12 |
| 21 | 75 | 25 | 8 | 42 | 0 | 43(100°C) | - | - | - | - | - | 60 | 40 | 0 | 0 | 0 | 20 | 40 | 124 | 10503 | 1898 | 20 | 82 | 25 | -10 |
| 22 | 75 | 25 | 8 | 27 | 3 | 60(100°C) | - | - | - | - | - | 60 | 40 | 0 | 0 | 0 | 20 | 40 | 124 | 13309 | 5035 | 25 | 63 | 19 | -12 |
| 23 | 75 | 25 | 20 | 28 | 0 | 42(100°C) | - | - | - | - | - | 60 | 40 | 0 | 0 | 0 | 20 | 40 | 123 | 11319 | 1500 | 17 | 55 | 18 | -10 |
| 24 | 75 | 25 | 8 | 27 | 0 | (*) | - | - | - | - | - | 60 | 40 | 0 | 0 | 0 | 20 | 40 | 122 | 13269 | 1807 | 21 | 63 | 20 | -8 |
| 25 | 75 | 25 | 8 | 28 | 0 | 42(100°C) | - | - | - | - | - | 60 | 40 | 0 | 0 | 0 | 20 | 40 | 124 | 37226 | 2446 | 13 | 76 | 18 | -14 |

BITUMEN PENETRATION = 183 UNLESS OTHERWISE INDICATED

(*) MFI = 5.3

Example Nr. 25: Bitumen penetration = 270

## Claims

1. Bituminous compositions comprising:
   A) 70-98% by weight of bitumen and

8

B) 2-30% by weight of a polymeric composition characterized in that said polymeric composition comprises:

B1) 30-65% by weight of a polyolefin having a high crystallinity selected from the group consisting of high density polyethylene (HDPE), isotactic polypropylene (PPi) or mixtures thereof, and

B2) 35-70% by weight of at least one polymer selected from:

(i) an ethylene/propylene (co)polymer, containing from 25 to 55% by weight of propylene;

(ii) an ethylene/propylene/diene terpolymer, subsequently vulcanized or not, containing from 25 to 55% by weight of propylene and from 0.2 to 10% by weight of polymerized diene;

(iii) ethylene vinylacetate (EVA) with a Melt-Flow Index (MFI) within the range of 0.3-500 g/10' and a vinylacetate (V.A.) content within the range of 1-50%;

(iv) polyethylene (PE) with a density within the range of 0.870-0.940 g/cc and a MFI within the range 0.2-200 g/10';

(v) atactic polypropylene, homo and/or copolymer, with an intrinsic viscosity within the range 0.3-1.2;

wherein polymers B1) and B2) have MFI values within the range of 0.5-100 g/10'.

2. Bituminous compositions, according to claim 1, which can be applied in the field of water-proofing and characterized in that they contain:

A) 80-90% by weight of bitumen with a penetration of 180-200 tenths of a millimeter (dmm);

B) 10-20% by weight of a polymeric composition as defined above.

3. Bituminous compositions, according to claim 1, which can be applied in the field of street paving and characterized in that they contain:

A) 90-95% by weight of bitumen with a penetration of 80-100 dmm;

B) 5-10% by weight of a polymeric composition as defined above.

4. Bituminous compositions, according to claim 1, characterized in that the polymeric composition B) comprises:

B1) a mixture of 20-60% by weight of HDPE and 35-20% by weight of PPi and

B2) 20-45% by weight of at least one polymer selected from (i), (ii), (iii), (iv) and (v).

5. Bituminous compositions, according to claim 1, characterized in that the bitumens have penetration values of between 40 and 350 tenths of a millimeter (dmm) (according to ASTM D-5) and ball-ring values of between 60 and 30°C (according to ASTM D-36).

6. Bituminous compositions, according to claim 5, characterized in that preferred bitumens are distillation (vacuum) bitumens having penetrations values of between 180 and 300 dmm (according to ASTM D-5) and ball-ring values of between 40 and 35°C (according to ASTM D-36).

7. Bituminous compositions, according to claim 1, characterized in that both the recycled polyethylenes, whatever their origin, and vergin polyethylenes indicated in B2) (iv), have density values of between 0.870 and 0.940 g/ml and a Melt-Flow Index value of between 0.2 and 200 g/10'.

8. Bituminous compositions, according to claim 1, characterized in that the average degree of dienic component of the ethylene/propylene/diene terpolymer (ii) is preferably between the values of 2 and 8% by weight.

9. Bituminous compositions according to claim 1, characterized in that the ethylene/propylene copolymers (i) have Mooney viscosity values (1 + 4) of between 13 (at 100°C) and 70 (at 125°C).

10. Bituminous compositions, according to claim 9, characterized in that the ethylene/propylene copolymers (i) have Mooney viscosity values (1 + 4) preferably of between 20 (at 100°C) and 40 (at 125°C).

11. Bituminous compositions according to claim 1, characterized in that they contain one or more compatibilizing agents selected from fillers, pigments, waxes, stabilizers and dyes.

9

**12.** Use of the bituminous compositions, according to claim 1, as binders in bituminous conglomerates for street paving.

**13.** Use of the bituminous compositions, according to claim 1, for water-proofing such as the lining of tanks, pipes also underground, lofts, vertical walls, terraces, viaducts and reservoirs for the collection of water.

**14.** Use of the bituminous compositions, according to claim 1, as water-proofing sheathings, combined with a reinforcement selected from felts, fabrics and laminates of organic and/or inorganic material.

**15.** Water-proofing sheathings, according to claim 14, wherein the reinforcement is preferably selected from non-woven fabrics made of polyester and glass.

**16.** Water-proofing sheathings, according to claim 14, which have thicknesses of about 2-6 mm.